# EUROPEAN PATENT APPLICATION

(11) **EP 2 410 772 A1**
(43) Date of publication of application: **25.01.2012**
(21) Application number: 11173758.1
(22) Date of filing: 13.07.2011
(51) Int. Cl.: H04W 4/02, H04L 29/08

(54) **Communication control device, communication control system, communication control method, and program for location-based services**

(30) Priority: 20.07.2010 JP 2010162546
(71) Applicant: Sony Corporation, Tokyo 108-0075 (JP)
(72) Inventor: Takamura, Kazuhisa, Minato-ku, Tokyo 108-0075 (JP)
(74) Representative: Davies, Simon Robert

(57) **Abstract**

There is provided a communication control device (200) comprising: a receiving unit that receives identification information for using a service, which has been read and transmitted by a wireless communication terminal (100), and user information transmitted from the wireless communication terminal; an identification unit that identifies a user of the wireless communication terminal who requests use of the service, a position of the user, the service the user desires to use, and functions necessary for providing the service to the user, based on the identification information and the user information received by the receiving unit; a selection unit that selects devices to be used for providing the service to the user, based on a result of identification by the identification unit; and a setting unit that sets a communication environment for each of the devices to be used which have been selected by the selection unit.

## Description

The present disclosure relates to a communication control device, a communication control system, a communication control method, and a program.

In recent years, as a method in which a wireless communication terminal executes an application through a network, the following two methods are mainly provided.

One of the methods that have been proposed is a method of executing the application using a concept such as an "X terminal" or a "thin client". In this method, the wireless communication terminal operates an execution server on the network through a screen of the wireless communication terminal and causes the execution server to execute an application program.

The other of the methods that have been proposed is a method using a concept such as an "agent". In this method, the wireless communication terminal downloads the application program from a control server on the network, through the network, and the wireless communication terminal executes the application program.

As a related art, JP-T-2004-523970, for example, proposes a technique of reducing organizational complexity in deployment of a device configuration for providing an information service.

In the method in which the wireless communication terminal remotely operates the server, however, there is a problem that a delay increases or a communication speed is reduced when a network distance from the wireless communication terminal to the server is large. Further, in the method in which the wireless communication terminal remotely operates the server, there is a problem that, even if a wireless communication network suited more to providing the service is present in the vicinity of the wireless communication terminal in addition to the wireless communication network that has been first employed for connection to the server, it is difficult to detect the more suited wireless communication network.

In the method of downloading the application program to the wireless communication terminal, there may be a problem that a signal processing speed of the wireless communication terminal or a memory capacity of the wireless communication terminal is not sufficient for the application. Further, in the method of downloading the application program to the wireless communication terminal, there is a problem that, even if the wireless communication network suited more to providing the service is present in the vicinity of the wireless communication terminal in addition to the wireless communication network that has been first employed for connection to the server, it is difficult to detect the more suited wireless communication network.

The above-mentioned two methods have a common problem. That is, when the wireless communication network for connection to the server is employed, only a communication speed QoS that is not be able to be satisfied by a user may be provided, so that the service may not be able to be comfortably used. In this case, even if another wireless communication network is present in the vicinity of the wireless communication network and the service may be comfortably used through the another wireless communication system, the another wireless communication network may not be able to be known. Further, the above-mentioned two methods have a common problem that a user interface by which the user executes the application should be implemented in a plurality of steps and is not simple. That is, the user should first select the "application for remote server connection" or the "application for remote program downloading", thereby specifying a connection destination. Then, the user should log-in to specify the application to be executed. The user interface is not therefore simple. Further, the above-mentioned two methods have a common problem that, even if an "application that provides a convenient service " is present at a location where the user is present, there is little information indicating the presence of the application, so that the user does not detect the presence of the application.

Assume that the user who uses the service employs a plurality of devices. Then, an optimal communication path needs to be set, based on functions and states of these devices. Further, when the devices have a same function, it is necessary to set a priority order of those devices and use those devices according to the priority order. Similarly, also when a plurality of communication paths among the devices are present, it is necessary to set a priority order of those communication paths and use those communication paths according to the priority order.

The approach described herein addresses the above-mentioned problems and helps to provide a communication control device, a communication control system, a communication control method, and a program by which a user may comfortably use a service when the user employs a plurality of devices to use the service.

Various respective aspects and features of the invention are defined in the appended claims. Combinations of features from the dependent claims may be combined with features of the independent claims as appropriate and not merely as explicitly set out in the claims.
According to an embodiment of the present invention, there is provided a communication control device including: a receiving unit that receives identification information for using a service, which has been read and transmitted by a wireless communication terminal, and user information transmitted from the wireless communication terminal; an identification unit that identifies a user of the wireless communication terminal who requests use of the service, a position of the user, the service the user desires to use, and functions necessary for providing the service to the user, based on the identification information and the user information received by the receiving unit; a selection unit that selects devices to be used for providing the service to the user, based on a result of identification by the identification unit; and a setting unit that sets a communication environment for each of the devices to be used which have been selected by the selection unit.

The selection unit may include a device identification unit that identifies devices usable for providing the service to the user at the position of the user identified by the identification unit, identifies a device owned by the user identified by the identification unit, identifies the devices including the functions necessary for providing the service identified by the identification unit to the user, and identifies performances of the devices including the functions necessary for providing the service identified by the identification unit to the user; a use device list preparation unit that prepares a list of the devices to be used, in which a priority order of the devices to be used has been set for each of the functions necessary for providing the service to the user, based on a result of identification by the device identification unit; and a device selection unit that selects the devices to be used for providing the service to the user, by referring to the list of the devices to be used which has been prepared by the use device list preparation unit.

The selection unit may include a connection destination list preparation unit that prepares a list of connection destinations in which a priority order of the connection destinations has been set, for each of the devices included in the list of the devices to be used which has been prepared by the use device list preparation unit a communication path list preparation unit that prepares a list of communication paths each between each of the devices and each server that executes a program for providing the service, by referring to the list of connection destinations prepared by the connection destination list preparation unit, a priority order of the communication paths having been set in the list of communication paths; and a communication path selection unit that selects one of the communication paths each between each of the device and the server, by referring to the list of communication paths prepared by the communication path list preparation unit.

The selection unit may include an investigation unit that investigates, for each device included in the list of the devices to be used which has been prepared by the use device list preparation unit, a communication path via the device having the function different from the function for which the list of the devices to be used has been prepared the connection destination list preparation unit preparing a list of the connection destinations each including as the connection destination the device having the different function, for each device included in the list of the devices to be used, based on a result of investigation by the investigation unit, a priority order of the connection destinations in the list having been newly set.

According to another embodiment of the present invention, there is provided a communication control system including: a receiving unit that receives identification information for using a service, which has been read and transmitted by a wireless communication terminal, and user information transmitted from the wireless communication terminal; an identification unit that identifies a user of the wireless communication terminal who requests use of the service, a position of the user, the service the user desires to use, and functions necessary for providing the service to the user, based on the identification information and the user information received by the receiving unit; a selection unit that selects devices to be used for providing the service to the user, based on a result of identification by the identification unit; and a setting unit that sets a communication environment for each of the devices to be used which have been selected by the selection unit.

According to another embodiment of the present invention, there is provided a communication control method including the steps of: receiving identification information for using a service, which has been read and transmitted by a wireless communication terminal, and user information transmitted from the wireless communication terminal; identifying a user of the wireless communication terminal who requests use of the service, a position of the user, the service the user desires to use, and functions necessary for providing the service to the user, based on the identification information and the user information; selecting devices to be used for providing the service to the user, based on a result of identification; and setting a communication environment for each of the devices to be used which have been selected.

According to another embodiment of the present invention, there is provided a program that causes a computer to function as: a receiving unit that receives identification information for using a service, which has been read and transmitted by a wireless communication terminal, and user information transmitted from the wireless communication terminal; an identification unit that identifies a user of the wireless communication terminal who requests use of the service, a position of the user, the service the user desires to use, and functions necessary for providing the service to the user, based on the identification information and the user information received by the receiving unit; a selection unit that selects devices to be used for providing the service to the user, based on a result of identification by the identification unit; and a setting unit that sets a communication environment for each of the devices to be used which have been selected by the selection unit.

As described above, when the user employs the devices to use the service, the user may comfortably use the service.
Embodiments of the invention will now be described with reference to the accompanying drawings, throughout which like parts are referred to by like references, and in which:

Fig. 1 is an explanatory diagram for explaining a schematic configuration of a communication system according to an embodiment of the present invention;
Fig. 2 is a block diagram showing a schematic configuration of a wireless communication terminal in the communication system in Fig. 1;
Fig. 3 is a block diagram showing a schematic configuration of a control server in the communication system in Fig. 1;
Fig. 4 is a block diagram showing a schematic configuration of an application server in the communication system in Fig. 1;
Fig. 5 is a flowchart of a communication control process that is executed by the communication system in Fig. 1;
Fig. 6 is a flowchart for explaining details of processes from step S104 to step S108 in the communication control process in Fig. 5;
Fig. 7 is a flowchart for explaining details of a different process after a process in step S204 in the communication control process in Fig. 6 has been executed;
Fig. 8 is a sequence diagram of the communication control process that is executed by the communication system in Fig. 1;
Fig. 9 is an explanatory diagram for explaining an example of a table stored in a service and ID DB;
Fig. 10 is an explanatory diagram for explaining an example of a table stored in the service and IDD DB;
Fig. 11 is an explanatory diagram for explaining an example of a table stored in a device DB;
Fig. 12 is an explanatory diagram for explaining an example of a table stored in a user information DB;
Fig. 13 is an explanatory diagram for explaining an example of a table stored in the device DB;
Fig. 14 is an explanatory diagram for explaining an example of a table stored in the device DB;
Fig. 15 is an explanatory diagram for explaining an example of a table stored in the service and IDDB;
Fig. 16 is an explanatory diagram for explaining an example of a list of devices to be used;
Fig. 17 is an explanatory diagram for explaining an example of a list of access points;
Fig. 18 is an explanatory diagram for explaining an example of a list of application servers;
Fig. 19 is an explanatory diagram for explaining an example of a list of communication paths; and
Fig. 20 is an explanatory diagram for explaining an example of a list of access points.

Hereinafter, an embodiment of the present invention will be described in detail with reference to the appended drawings. Note that, in this specification and the appended drawings, structural elements that have substantially the same function and structure are denoted with the same reference numerals, and repeated explanation of these structural elements is omitted.

The embodiment will be described in the following order.
1. Configuration of Communication System
2. Configuration of Wireless Communication Terminal
3. Configuration of Control Server
4. Configuration of Application Server
5. Communication Control Process

### [1. Configuration of Communication System]

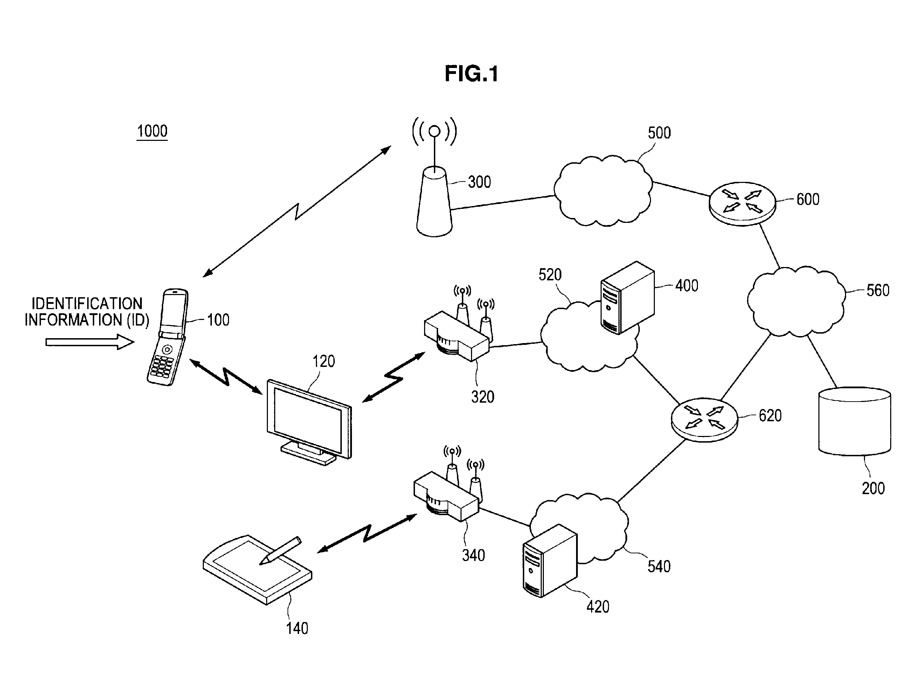

First, a communication system according to an embodiment of the present invention will be described. Fig. 1 is an explanatory diagram for explaining a schematic configuration of the communication system according to this embodiment.

Referring to Fig. 1, a communication system 1000 is an example of a communication control system of the approach described herein, and includes a wireless communication terminal 100, an output device 120, an input device 140, a control server 200, access points 300, 320, and 340, application servers 400 and 420, networks 500, 520, 540, and 560, and routers 600 and 620. The control server 200 is an example of a communication control device of the approach described herein.

The wireless communication terminal 100 is a wireless communication terminal such as a cellular phone, and may read identification information (hereinafter referred to as "ID") for using a service at a certain location, for example. The ID is a bar code, a two-dimensional bar code, RFID (Radio Frequency Identification), broadcast information flown together with a beacon (SSID identification, etc.) of a wireless LAN, a broadcast signal from a femtocell, or a marker from which specific information may be obtained by shooting the marker by a camera and then analyzing the marker. A method may be adopted in which a specific object is set as the ID and the ID is identified by image analysis of the specific object. The ID includes position information. A user of the wireless communication terminal 100 may discover the ID at the certain location, and may read the ID to use the service indicated by the ID when the user desires to use the service. After the wireless communication terminal 100 has read the ID, the wireless communication terminal 100 transmits the read ID and user information to the access point 300 by wireless communication. The user information includes device information on the wireless communication terminal 100, user identification information on the user himself, and user set information capable of being arbitrarily set by the user. The device information on the wireless communication terminal 100 is information on a resolution of a display, and the like.

The output device 120 is an output device such as the display, and may perform wireless communication. The output device 120 may be a device owned by the user of the wireless communication terminal 100, or may be a device installed at a certain location.

The input device 140 is an input device such as a touch panel or a keyboard, and may perform wireless communication. The input device 140 may be a device owned by the user of the wireless communication terminal 100, and may be a device installed at a certain location.

When the control server 200 receives the ID and the user information from the access point 300, the control server 200 identifies the user who requests use of the service, the position of the user, the service the user desires to use, and functions necessary for providing the service to the user. The control server 200 selects devices to be used for providing the service to the user, and sets a communication environment for each of the devices. The control server 200 provides an application program to an application server of the selected devices, such as an application server 400.

The access point 300 may perform wireless communication with the wireless communication terminal 100. When the access point 300 receives the ID and the user information from the wireless communication terminal 100, the access point 300 transmits the received ID and the received user information to the control server 200 through the network 500, the router 600, and the network 560.

The access point 320 is an access point that is present in the vicinity of the output device 120. The access point 340 is an access point that is present in the vicinity of the input device 140.

The application server 400 is connected to the network 520. The application server 420 is connected to the network 540. Each of these application servers 400 and 420 may execute the application program provided from the control server 200.

The network 500 is a network to which the access point 300 is connected. The network 520 is a network to which the access point 320 is connected. The network 540 is a network to which the access point 340 is connected. The network 560 is a network to which the control server 200 is connected.

The router 600 is a router that connects the network 500 and the network 560. The router 620 is a router that connects the network 520, the network 540, and the network 560.

### [2. Configuration of Wireless Communication Terminal]

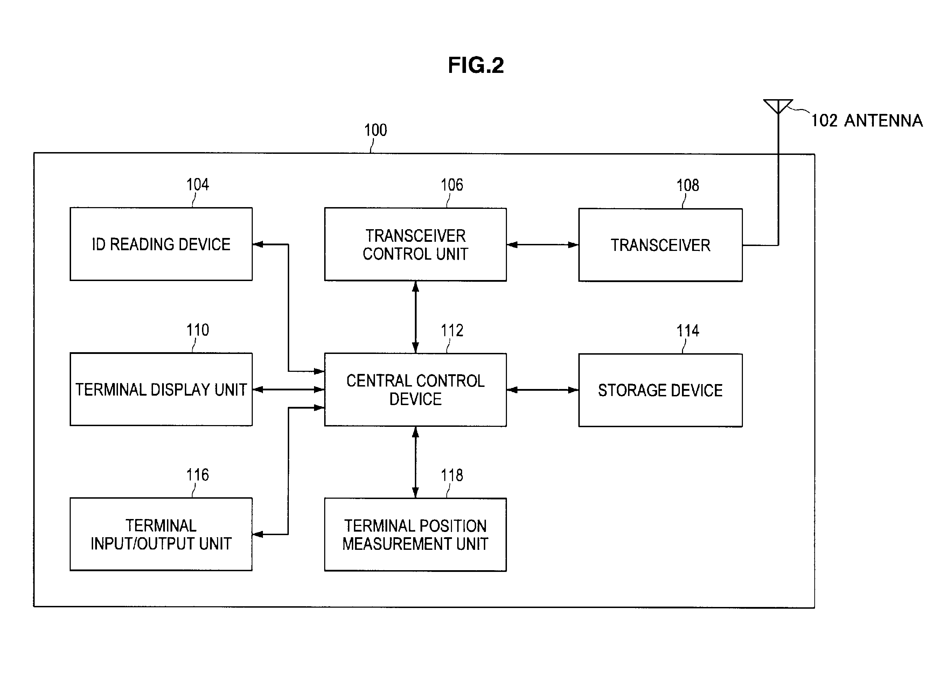

Next, a configuration of the wireless communication terminal 100 in the communication system 1000 in Fig. 1 will be described. Fig. 2 is a block diagram showing a schematic configuration of the wireless communication terminal in the communication system 1000 in Fig. 1.

Referring to Fig. 2, the wireless communication terminal 100 includes an antenna 102, an ID reading device 104, a transceiver control unit 106, a transceiver 108, a terminal display unit 110, a central control device 112, a storage device 114, a terminal input/output unit 116, and a terminal position measurement unit 118.

The antenna 102 transmits or receives data by wireless communication. The ID reading device 104 may read the ID. The ID reading device 104 may be any device capable of reading the ID, and corresponds to a camera device, for example.

The transceiver control unit 106 performs control over the transceiver 108. The transceiver 108 may accommodate a plurality of wireless communication schemes.

The terminal display unit 110 outputs a result of execution of the application program. The central control device 112 controls the ID reading device 104, the transceiver control unit 106, the terminal display unit 110, the storage device 114, the terminal input/output unit 116, and the terminal position measurement unit 118.

The storage device 114 stores the device information such as the resolution of the display of the terminal display unit 100, the user identification information on the user himself, and the user set information set by the user, for example. The terminal input/output unit 116 may receive an operation from the user, for example. The terminal position measurement unit 118 may measure a position of the wireless communication terminal 100, using a GPS system or the like.

### [3. Configuration of Control Server]

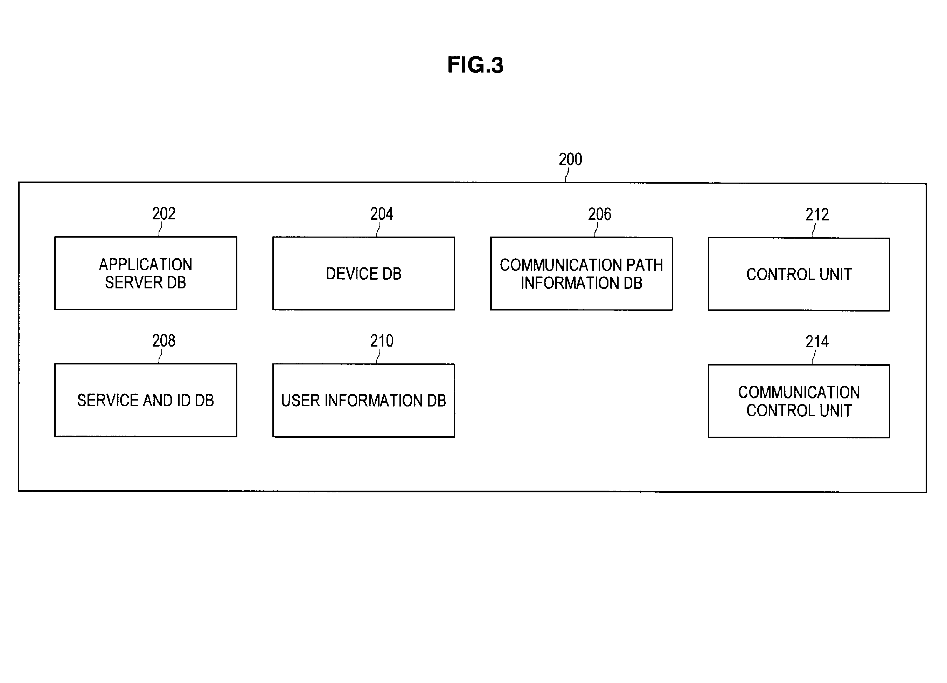

Next, a configuration of the control server 200 in the communication system 1000 in Fig. 1 will be described. Fig. 3 is a block diagram showing a schematic configuration of the control server 200 in the communication system 1000 in Fig. 1.

Referring to Fig. 3, the control server 200 includes an application server DB 202, a device DB 204, a communication path information DB 206, a service and ID DB 208, a user information DB 210, a control unit 212, and a communication control unit 214.

The application server DB 202 is a database on an application server capable of being used. The device DB is a database on devices capable of being used. The communication path information DB 206 is a database on a communication path capable of being used by each device. The service and ID DB 208 is a database on a correspondence relationship between an ID and a service requested by the ID. The user information DB 210 is a database on a user who requests use of the service, or a database on the user of the wireless communication terminal 100.

The control unit 212 controls the control server 200 as a whole. The communication control unit 214 may receive the ID and the user information sent from the access point 300, for example. The control unit 212 and the service and ID DB 208 constitute an example of an identification unit of the approach described herein. The control unit 212, the device DB 204, the user information DB 210, and the service and ID DB 208 constitute an example of a selection unit, a device identification unit, a use device list preparation unit, a device selection unit, a connection destination list preparation unit, a communication path list preparation unit, a communication path selection unit, and an investigation unit of the approach described herein. The control unit 212 and the communication control unit 214 constitute an example of a setting unit of the approach described herein. The communication control unit 214 constitutes an example of a receiving unit of the approach described herein.

### [4. Configuration of Application Server]

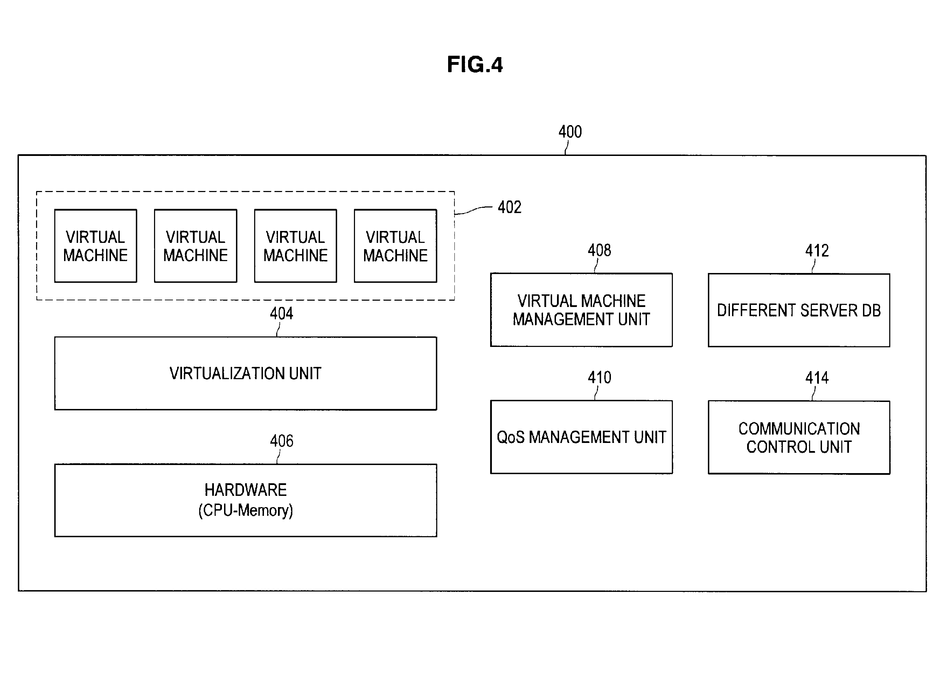

Next, a configuration of the application server 400 in the communication system 1000 in Fig. 1 will be described. Fig. 4 is a block diagram showing a schematic configuration of the application server 400 in the communication system 1000 in Fig. 1. Since the application server 420 has the same functional configuration as the application server 400, description of the application server 420 will be omitted.

Referring to Fig. 4, the application server 400 includes virtual machines 402, a virtualization unit 404, hardware 406, a virtual machine management unit 408, a QoS management unit 410, a different server DB 412, and a communication control unit 414.

A plurality of virtual machines constituting the virtual machines 402 are implemented on the hardware 406. The virtual machine management unit 408 dynamically assigns the virtual machines constituting the virtual machines 402 according to specifications of the application of which execution is requested. The QoS management unit 410 manages quality of execution (QoS) of the application including quality of communication of the application. The other server DB412 is a database on different control servers and different application servers. The communication control unit 414 controls communication with the network.

### [5. Communication Control Process]

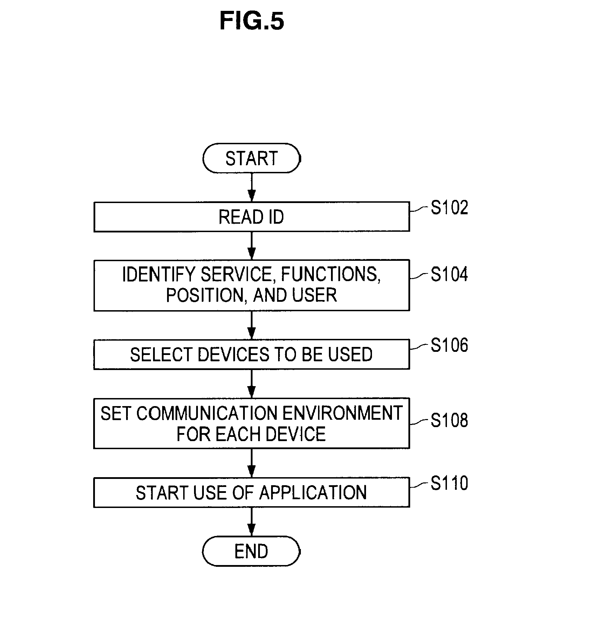

A communication control process that is executed by the communication system 1000 in Fig. 1 will be described below. Fig. 5 is a flowchart of the communication control process that is executed by the communication system 1000 in Fig. 1. This process is executed when the user of the wireless communication terminal 100 discovers an ID indicating a service at a certain location and desires to use the service, for example.

Referring to Fig. 5, the wireless communication terminal 100 first reads the ID at the certain location (in step S102). The wireless communication terminal 100 transmits the ID read in step S102 and the user information stored in the storage device 114 to the access point 300. Then, the access point 300 transmits the ID and the user information received from the wireless communication terminal 100 to the control server 200.

Next, the communication server 200 receives the ID and the user information transmitted from the access point 300 to identify the user who requests use of the service, the position of the user, the service the user desires to use, and functions necessary for providing the service to the user (in step S104).

Next, the control server 200 selects devices to be used for providing the service to the user, based on a result of identification in step S104 (in step S106).

Next, the control server 200 sets a communication environment for each of the devices to be used which have been selected in step S106 (in step S108).

Next, the control server 200 provides an application program to an application server of the devices to be used which have been selected in step S106, and the application server to which the application program has been provided executes the application program in response to an execution request from the user. The user starts use of the application (in step S110), thereby finishing this process. When a plurality of application servers are selected in step S110 as the devices to be used, the control server 200 should provide the application program to all the application servers. In this case, the application servers should execute the application program, being synchronized with one another.

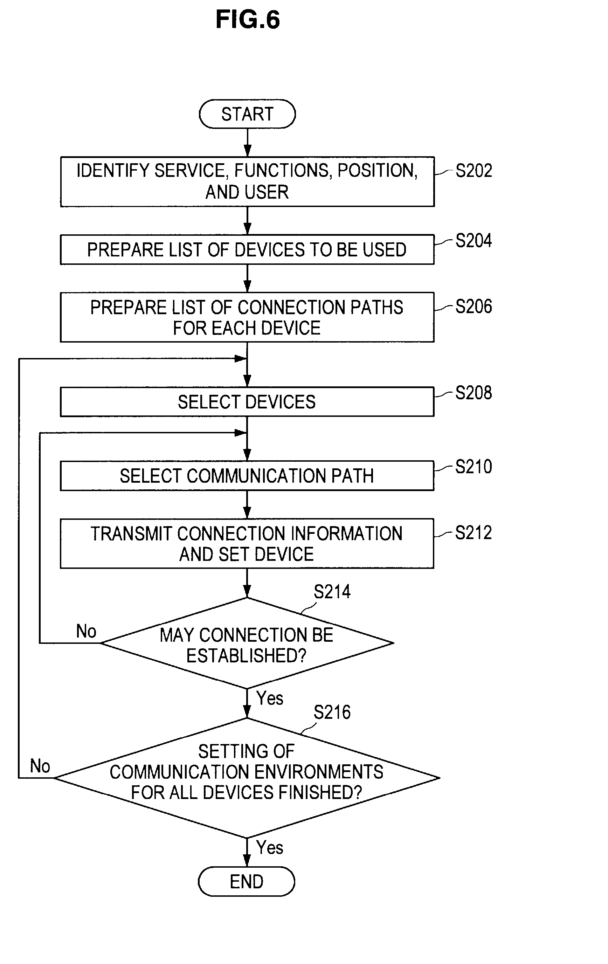

Next, details of processes from step S104 to step S108 in the communication control process in Fig. 5 will be described. Fig. 6 is a flowchart for explaining the details of the processes from step S104 to step S108 in the communication control process in Fig. 5.

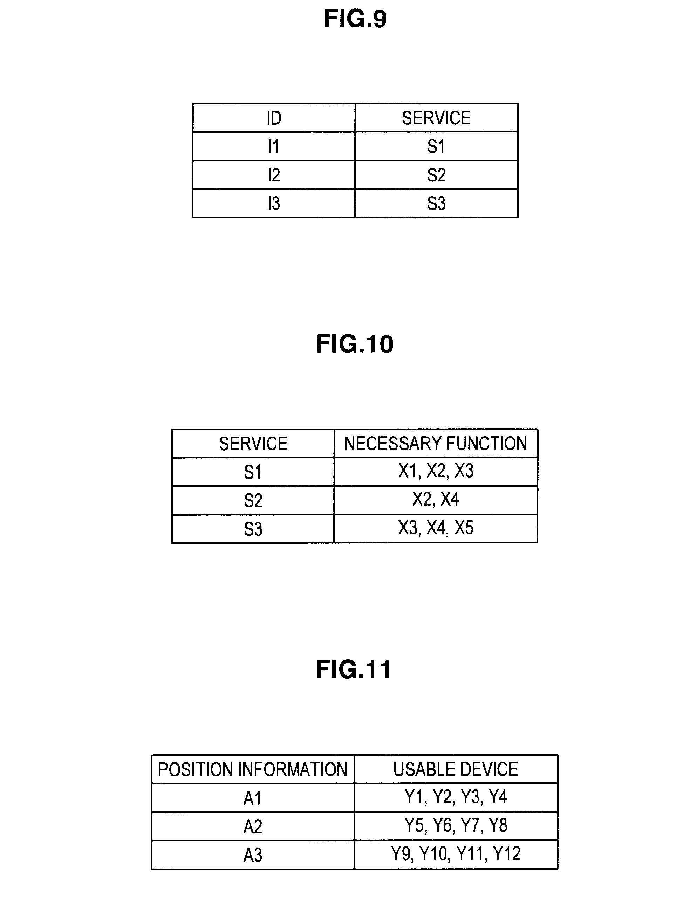

Referring to Fig. 6, when the control server 200 receives the ID and the user information from the access point 300, the control server 200 refers to a table stored in the service and ID DB208 shown in Fig. 9, for example, to identify the service the user desires to use, from the received ID. Further, the control server 200 refers to a table stored in the service and ID DB 208 shown in Fig. 10, for example, to identify functions necessary for the identified service to the user. The control server 200 identifies the position of the user, based on the position information included in the received ID. The control server 200 identifies the user who requests use of the service, based on the user identification information included in the received user information (in step S202).

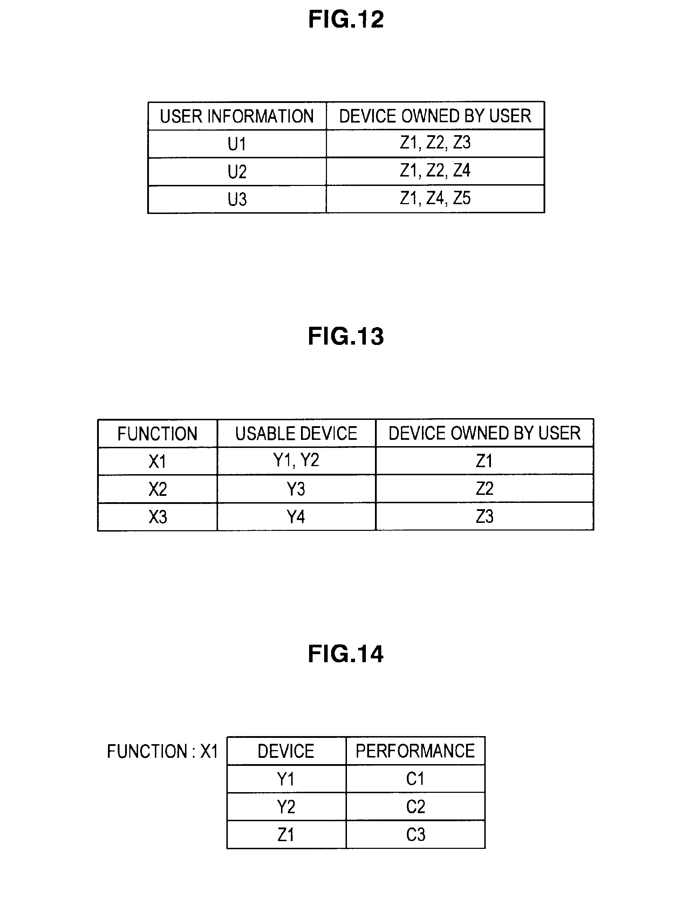

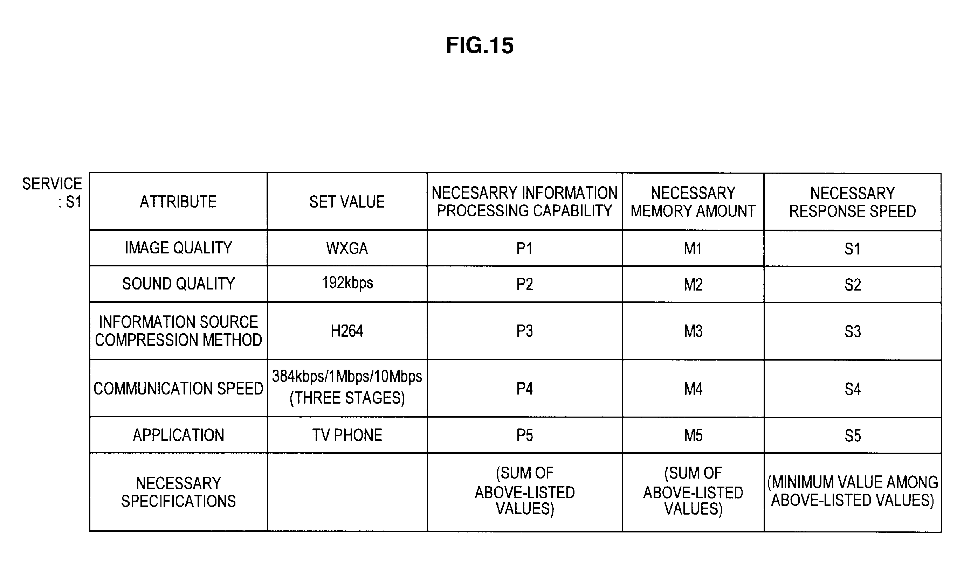

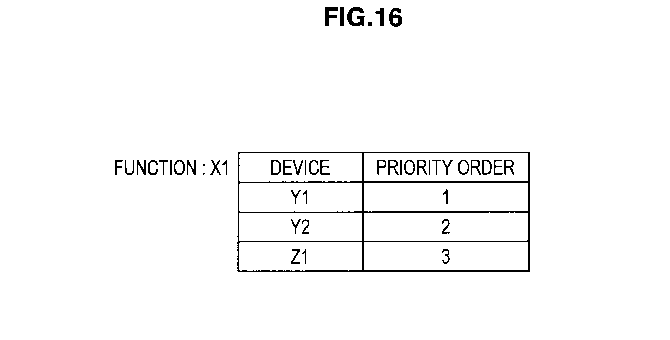

Next, the control server 200 refers to a table stored in the device DB 204 shown in Fig. 11, for example, to identify devices usable for providing the service to the user at the position of the user, from the position information included in the received ID. The control server 200 refers to a table stored in the user information DB 210 shown in Fig. 12, for example, to identify a device owned by the user, from the user identification information included in the received user information. Then, the control server 200 refers to a table stored in the device DB 204 shown in Fig. 13, for example, to identify the devices having the functions necessary for providing the service identified in step S202 to the user. The control server 200 refers to a table stored in the device DB204 shown in Fig. 14, for example, to identify performances of the devices including the functions necessary for providing the service to the user. The control server 200 refers to a table stored in the service and ID DB208 shown in Fig. 15, for example, to identify the performances necessary for the devices for providing the service to the user. Then, the control server 200 prepares a list of the devices to be used, in which a priority order of the devices has been set for each of the functions necessary for providing the service to the user, as shown in Fig. 16, for example (in step S204).

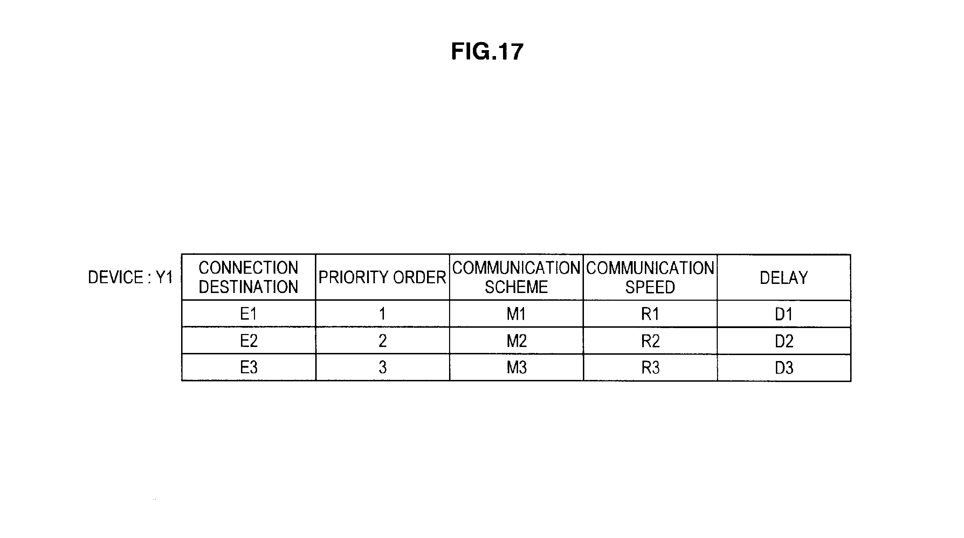

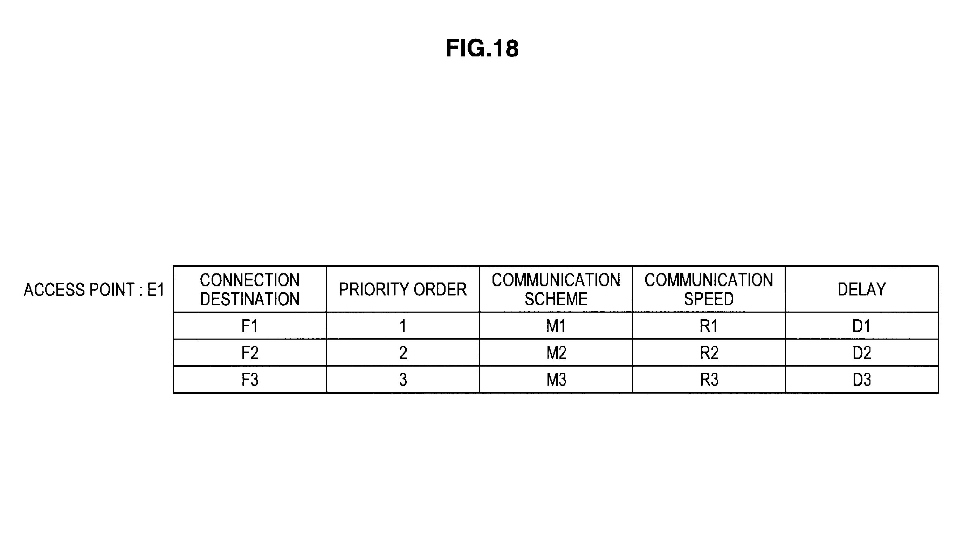

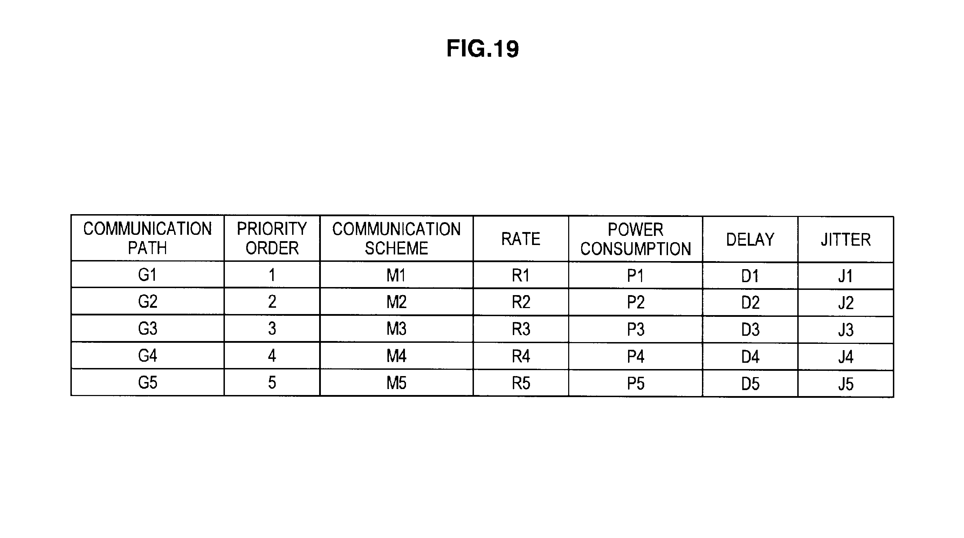

Next, the control server 200 prepares a list of connection destinations or access points in which a priority order of the access points has been set for each device in the list of the devices to be used which has been prepared in step S204, as shown in Fig. 17, for example. The priority order of the access points is, for example, set so that priority is given to the access point having a small distance to the device. The control server 200 further prepares a list of connection destinations or application servers for each of the access points included in the prepared list of access points, as shown in Fig. 18. In this list as well, a priority order of the application servers is set. The priority order is, for example, set so that priority is given to the application server having a small network distance to the access point. The control server 200 refers to the prepared list of access points and the prepared list of application servers to prepare a list of communication paths between the respective devices and the respective application servers, in which a priority order of the communication paths has been set, as shown in Fig. 19, for example (in step S206).

Next, the control server 200 refers to the list of the devices to be used which has been prepared in step S204 to select the devices for providing the service to the user (in step S208). The functions necessary for providing the service to the user may be shared among the devices, or the functions necessary for providing the service to the user may be played by one device.

Next, the control server 200 refers to the list of communication paths prepared in step S206, and selects the communication path between each of the devices selected in step S208 and the application server (in step S210). The communication path selected in step S210 may be selected so that connection is made to the application server that is different according to the device.

Next, the control server 200 transmits connection information for connecting each of the devices selected in step S208 and the application server to be connected to the device through the communication path selected in step S210 to set a communication environment between the device and the application server (in step S212).

Next, the controls server 200 determines whether or not the connection between the device and the application server may be established (in step S214).

When it is determined that connection between the device and the application server may not be able to be established as a result of determination in step S214 (No in step S214), the operation is returned to the process in step S210. Then, the control server 200 selects the communication path having a next high priority as the communication path between the device and the application server. When none of the communication paths between the device and the application server can be established, the control server 20 refers to the list of the devices to be used which has been prepared in step S204 to select the device having a next high priority as the device for providing the service to the user.

When it is determined that the connection between the device and the application server may be established as a result of determination in step S214 (Yes in step S214), the control server 200 determines whether or not communication environments for all the devices necessary for providing the service to the user have been set (in step S216).

When it is determined that the communication environments for all the devices necessary for providing the service to the user have not been set (No in step S216), the operation is returned to the process in step S208 to select the devices for which the communication environments have not been set, or the devices having the different function from the devices for which the communication environments have been set.

When it is determined that the communication environments for all the devices necessary for providing the service to the user have been bet as a result of determination in step S216 (Yes in step S216), this communication control process in Fig. 6 is finished.

According to the communication control process shown in Figs. 5 and 6, when a user utilizes a plurality of devices to use a service, the user may comfortably use the service. Further, according to this process, a service for remote execution of an application and a service for a wireless communication connection may be combined and may be explicitly shown to the user, using an ID.

Further, this process facilitates selection of one of a plurality of communication paths suited to the service that will be provided to the user. Still further, this process facilitates selection of one of a plurality of application servers suited to the service that will be provided to the user.

This process facilitates remote execution of an application in accordance with the attribute of the wireless communication terminal 100. Further, according to this process, by remotely executing an application program, even the wireless communication terminal 100 that is not excellent in signal processing capability may provide to the user an application for which high processing capability is necessary.

This process further allows devices associated with a service to be automatically discovered and then used according to the situations of a user and a communication path. Further, according to this process, when a plurality of devices having functions necessary for providing a service, the devices may be prioritized and may be used in the descending order of priorities.

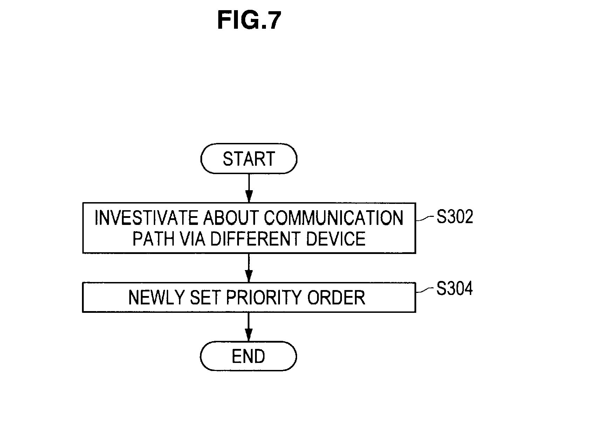

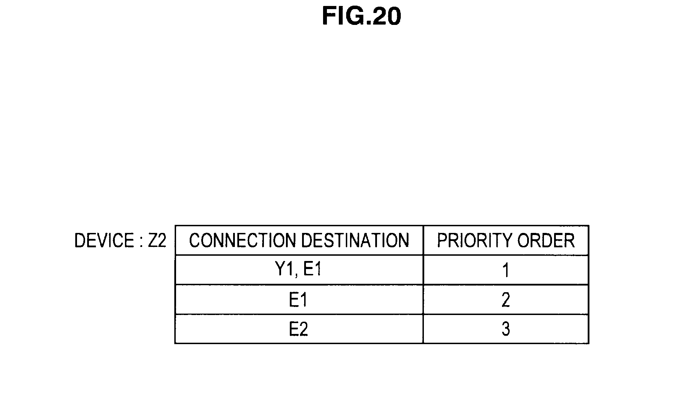

After the control server 200 has executed the process in step S204 in the communication control process in Figs. 5 and 6, for each device in the list of the devices to be used which has been prepared for each function in step S204, the control server 200 investigates a communication path via the device having the function different from the function for which the list has been prepared, as shown in Fig. 7 (in step S302). Then, as shown in Fig. 20, for example, for each device in the list of the devices to be used which has been prepared in step S204, the control server 200 prepares a list of the connection destinations or the access points including as the connecting destination the device having the function different from the function for which the list has been prepared (in step S304). In this list, a priority order of the access points is newly set. That is, referring to Fig. 1, the control server 200 investigates a communication path via the output device 120 among communication paths for the wireless communication terminal 100, for example. When the communication path via the output device 120 is preferred, a priority order is newly set so that the priority order of the communication path including the output device 120 as the connection destination becomes high.

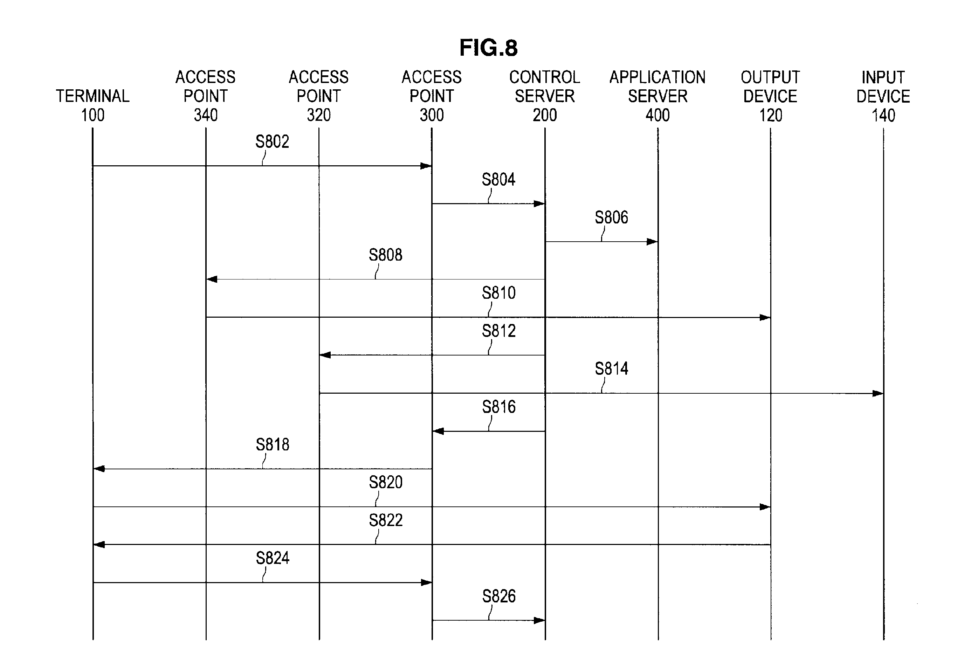

Details of the communication control process that is executed by the communication system 1000 in Fig. 1 will be described below. Fig. 8 is a sequence diagram of the communication control process that is executed by the communication system 1000 in Fig. 1.

Referring to Fig. 8, the wireless communication terminal 100 first reads a certain ID at a certain location, and transmits the ID and user information to the access point 300 (in step S802). Then, the access point 300 transmits the received ID and the received user information to the control server 200 (in step S804).

Next, the control server 200 selects devices to be used for providing the service to the user, based on the received ID and the received user information, and sets a communication environment for each of the selected devices to be used (in steps S806 to S818).

Next, the control server 200 requests setting of communication paths between the respective devices to the pertinent devices such as the wireless communication terminal 100 and the output device 120 when necessary (in steps S820 to S826).

According to the communication control process in Fig. 8, when the user uses a plurality of devices to receive a service, an optimal communication path among the devices may be set.

The approach described herein may also include providing to a system or an apparatus a storage medium in which a software program code for implementing a function in this embodiment is stored, and by reading and executing the program code stored in the storage medium by a computer (or a CPU, an MPU, or the like) of the system or the apparatus.

In this case, the program code itself read from the storage medium implements the function of this embodiment described above, and the program code and the storage medium in which the program code is stored constitute the relevant embodiment.

As the storage medium for supplying the program code, a floppy disk (registered trademark), a hard disk, a magneto-optical disk, an optical disk such as a CD-ROM, a CD-R, a CD-RW, a DVD-ROM, a DVD-RAM, a DVD-RW, a DVD + RW, a magnetic tape, a nonvolatile memory card, a ROM, or the like may be used. Alternatively, the program code may be downloaded through the network.

The functionality of this embodiment may be implemented by executing the program code read by the computer. Further, it may also be so arranged that, a part or all of the actual process is executed by an OS (operating system) running on the computer or the like, based on an instruction of the program code, and the functionality of this embodiment is implemented by that process.

Further, the following arrangement may also be made. That is, the program code read from the storage medium is written into a memory provided at a functional memory extension board inserted into the computer and/or a memory provided at a functional extension unit connected to the computer. Then, a CPU or the like provided at at least one of the extension board and the extension unit for implementing an extension function executes a part or all of the actual process, based on the instruction in the program code. The functionality of this embodiment is then implemented by that process.

Although an embodiment of the present invention is described in detail above with reference to the appended drawings, the approach described herein is not limited thereto. It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisages as aspects of the present invention.

## Claims

1. A communication control device comprising:
a receiving unit that receives identification information for using a service, which has been read and transmitted by a wireless communication terminal, and user information transmitted from the wireless communication terminal;
an identification unit that identifies a user of the wireless communication terminal who requests use of the service, a position of the user, the service the user desires to use, and functions necessary for providing the service to the user, based on the identification information and the user information received by the receiving unit;
a selection unit that selects devices to be used for providing the service to the user, based on a result of identification by the identification unit; and
a setting unit that sets a communication environment for each of the devices to be used which have been selected by the selection unit.

2. The communication control device according to claim 1, wherein
the selection unit includes:
a device identification unit that identifies devices usable for providing the service to the user at the position of the user identified by the identification unit, identifies a device owned by the user identified by the identification unit, identifies the devices including the functions necessary for providing the service identified by the identification unit to the user, and identifies performances of the devices including the functions necessary for providing the service identified by the identification unit to the user;
a use device list preparation unit that prepares a list of the devices to be used, in which a priority order of the devices to be used has been set for each of the functions necessary for providing the service to the user, based on a result of identification by the device identification unit; and
a device selection unit that selects the devices to be used for providing the service to the user, by referring to the list of the devices to be used which has been prepared by the use device list preparation unit.

3. The communication control device according to claim 2, wherein
the selection unit includes:
a connection destination list preparation unit that prepares a list of connection destinations in which a priority order of the connection destinations has been set, for each of the devices included in the list of the devices to be used which has been prepared by the use device list preparation unit;
a communication path list preparation unit that prepares a list of communication paths each between each of the devices and each server that executes a program for providing the service, by referring to the list of connection destinations prepared by the connection destination list preparation unit, a priority order of the communication paths having been set in the list of communication paths; and
a communication path selection unit that selects one of the communication paths each between each of the device and the server, by referring to the list of communication paths prepared by the communication path list preparation unit.

4. The communication control device according to claim 3, wherein
the selection unit includes:
an investigation unit that investigates, for each device included in the list of the devices to be used which has been prepared by the use device list preparation unit, a communication path via the device having the function different from the function for which the list of the devices to be used has been prepared;
the connection destination list preparation unit preparing a list of the connection destinations each including as the connection destination the device having the different function, for each device included in the list of the devices to be used, based on a result of investigation by the investigation unit, a priority order of the connection destinations in the list having been newly set.

5. A communication control system comprising:
a receiving unit that receives identification information for using a service, which has been read and transmitted by a wireless communication terminal, and user information transmitted from the wireless communication terminal;
an identification unit that identifies a user of the wireless communication terminal who requests use of the service, a position of the user, the service the user desires to use, and functions necessary for providing the service to the user, based on the identification information and the user information received by the receiving unit;
a selection unit that selects devices to be used for providing the service to the user, based on a result of identification by the identification unit; and
a setting unit that sets a communication environment for each of the devices to be used which have been selected by the selection unit.

6. A communication control method comprising the steps of:
receiving identification information for using a service, which has been read and transmitted by a wireless communication terminal, and user information transmitted from the wireless communication terminal;
identifying a user of the wireless communication terminal who requests use of the service, a position of the user, the service the user desires to use, and functions necessary for providing the service to the user, based on the identification information and the user information;
selecting devices to be used for providing the service to the user, based on a result of identification; and
setting a communication environment for each of the devices to be used which have been selected.

7. A program that causes a computer to function as:
a receiving unit that receives identification information for using a service, which has been read and transmitted by a wireless communication terminal, and user information transmitted from the wireless communication terminal;
an identification unit that identifies a user of the wireless communication terminal who requests use of the service, a position of the user, the service the user desires to use, and functions necessary for providing the service to the user, based on the identification information and the user information received by the receiving unit;
a selection unit that selects devices to be used for providing the service to the user, based on a result of identification by the identification unit; and
a setting unit that sets a communication environment for each of the devices to be used which have been selected by the selection unit.
